# EUROPEAN PATENT APPLICATION

(11) **EP 4 109 191 A1**
(43) Date of publication of application: **28.12.2022**
(21) Application number: 22176916.9
(22) Date of filing: 02.06.2022
(51) Int. Cl.: G05D 1/00, G05D 1/02, G06N 3/02, G06N 3/08

(54) **METHODS AND SYSTEMS FOR GENERATING GROUND TRUTH DATA**

(30) Priority: 18.06.2021 EP 21180296
(71) Applicant: Aptiv Technologies Limited, St. Michael (BB)
(72) Inventor: SIEGEMUND, Jan, 50825 Köln (DE); KURIAN, Jittu, 42553 Velbert (DE); LABUSCH, Sven, 50737 Köln (DE); SPATA, Dominic, 58455 Witten (DE); BECKER, Adrian, 51375 Leverkusen (DE); ROESLER, Simon, 41460 Neuss (DE); WESTERHOFF, Jens, 44797 Bochum (DE)
(74) Representative: Manitz Finsterwald Patent- und Rechtsanwaltspartnerschaft mbB

(57) **Abstract**

A computer implemented method for generating ground truth data may comprises the following steps carried out by computer hardware components: for a plurality of points in time, acquiring sensor data for the respective point in time; and for at least a subset of the plurality of points in time, determining ground truth data of the respective point in time based on the sensor data of at least one present and/ or past point of time and at least one future point of time.

## Description

### FIELD

The present disclosure relates to methods and system for generating ground truth data, in particular for employing future knowledge when generating ground truth data, for example for radar based machine learning on grid output.

### BACKGROUND

In the field of driver assistance systems and autonomous driving, often radar sensors are used to perceive information about the vehicle's environment. One category of problems to be solved is to determine which parts of the environment of the ego-vehicle are occupied (for example in terms of an occupancy grid) or where the ego-vehicle can safely drive (in terms of an underdrivability classification). For that purpose, it may be necessary to decide which portions of the environment are occupied or whether a detected object in front of the ego-vehicle is underdrivable (like a bridge) or not (like the end of a traffic jam).

Often, the capability of automotive radars are limited with regards to the resolution and accuracy of measuring, for example related to the distance and/or elevation angle of objects (from which the object height can be determined). Because of that, advanced methods may be desired to resolve the uncertainty in occupancy grid detection and/or in classifying between underdrivable and non-underdrivable objects.

Nowadays, machine learning techniques are widely used to "learn" the parameters of a model for such an occupancy grid determination or classification. An important prerequisite to develop machine learning methods is the availability of ground truth data for a given problem.

Machine learning methods need to be trained. A possible way of training a machine learning method includes providing ground truths (for example describing the ideal or wished output of the machine learning method) to the machine learning method during training.

There are some standard but expensive and/or time consuming methods to generate ground truth, including manual labeling of the data by a human expert and/ or using a second sensor (e.g. Lidar/camera). The second sensor needs to be available along with the Radar on the same vehicle, and extrinsic calibration / temporal sync need to be done between the sensors. Furthermore, additional methods are required to determine an occupancy grid and/ or underdrivability with the second sensor.

Thus, there is a need for improved methods for providing ground truth data.

### SUMMARY

The present disclosure provides a computer implemented method, a computer system, and a non-transitory computer readable medium according to the independent claims. Embodiments are given in the subclaims, the description and the drawings.

In one aspect, the present disclosure is directed at a computer implemented method for generating ground truth data, the method comprising the following steps carried out by computer hardware components: for a plurality of points in time, acquiring sensor data for the respective point in time; and for at least a subset of the plurality of points in time, determining ground truth data of the respective point in time based on the sensor data of at least one present and/or past point of time and at least one future point of time.

In other words, sensor data from future points in time may be used to determine ground truth data of a present point in time. It will be understood that this is possible for example by recording sensor data for a plurality of points in time, and then for each of the plurality of points in time determining ground truth data for the respective point in time based on several of the plurality of points in time (in particular including a point in time which is after the respective point in time).

Ground truth data may represent information that is assumed to be known to be real or true, and is usually provided by direct observation and measurement (i.e. empirical evidence) as opposed to information provided by inference.

According to various embodiments, the present point of time, past point of time and/or future point of time are relative to the respective point in time.

According to various embodiments, the sensor data comprises at least one of radar data or lidar data.

According to various embodiments, the computer implemented method further comprises training a machine learning model (for example an artificial neural network) based on the ground truth data. Alternatively, the ground truth data may be used for any other purpose, where ground truth data may be required, for example for evaluation. Ground truth data may refer to data that represents the real situation; for example, when training a machine learning model, the ground truth data represents the desired output of the machine learning model.

According to various embodiments, the machine learning model comprises a step for determining an occupancy grid; and/ or the machine learning model comprises a step for underdrivability classification. Underdrivability classification may provide a classification (for example of cells of a map) into "underdrivable" (i.e. suited for a specific vehicle to driver under or underneath) and "non-underdrivable" (i.e. not suited for a specific vehicle to driver under or underneath). An example of a "non-underdrivable" cell may be a cell which includes a bridge which is too low for the vehicle to driver under, or a tunnel which is too low for the vehicle to drive through.

According to various embodiments, the ground truth data is determined based on at least two maps. It has been found that using at least two maps, efficiency of the method may be increased due to the more versatile data available in at least two maps (as compared to a single map).

According to various embodiments, the at least two maps comprise a limited range map based on scans below a pre-determined range threshold ("range" means here the distance between sensor and object). Thus, the limited range map may (only) include scans with a limited range. For the limited range map, scans (or data which includes the scans) above the pre-determined range threshold may not be used (or may be discarded) when determining the limited range map. For example, scans from sensors which provide scans of a long range may be limited to a below specific range (so that only scans with a range below the pre-determined range-threshold are used for determining the limited range map). Alternatively, sensors which only can measure up to the pre-determined range threshold may be used (so that no scans have to be discarded, because all scans provided by the sensor are per-se below the pre-determined range threshold).

According to various embodiments, the at least two maps comprise a full range map based on scans irrespective of a range of the scans. Thus, the full range map may include scans with a full range.

According to various embodiments, a cell is labelled as non-underdrivable or underdrivable based on a probability of the cell of the full range map and a probability of the corresponding cell of the limited range map. A probability of each cell may indicate a probability that an object is present in that cell. In other words, the probability is related to occupancy.

According to various embodiments, the cell is labelled as non-underdrivable if the probability of the cell in the limited range map is above a first pre-determined threshold. The first pre-determined threshold may for example be set to a value that is at least equal to the default probability for a cell before a detection is made. The default probability for a cell before a detection is made may be 0.5. The first pre-determined threshold may for example be set to 0.5 or to 0.7. Thus, it may be ensured that the probability value exceeds this threshold in order to be sure about the occupancy of the cell (i.e. "that there is an object")

According to various embodiments, the cell is labelled as underdrivable if the probability of the cell in the full range map is above a second pre-determined threshold and the probability of the cell in the limited range map is equal to a value representing no occupation in the cell, for example 0.5 (which means that there is no occupancy). The second pre-determined threshold may for example be set to 0.5 or 0.7. For example, if the second pre-determined threshold in the full range map is exceeded in combination with the probability of 0.5 for the limited range map, it may be sure that there is an object and that the object is underdrivable.

In another aspect, the present disclosure is directed at a computer system, said computer system comprising a plurality of computer hardware components configured to carry out several or all steps of the computer implemented method described herein. The computer system can be part of a vehicle.

In another aspect, the present disclosure is directed at a computer system, said computer system comprising a plurality of computer hardware components configured to use the machine learning model trained according to the computer implemented method as described herein. According to various embodiments, the computer system is comprised in an advanced driver-assistance system.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit. The computer system may further comprise a sensor configured to acquire the sensor data.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

### DRAWINGS

Exemplary embodiments and functions of the present disclosure are described herein in conjunction with the following drawings, showing schematically:
- Fig. 1: an illustration of a traditional pipeline of occupancy grid creation;
- Fig. 2: occupancy grid creation in the training procedure according to various embodiments;
- Fig. 3: an illustration of a mask which may be defined as a certain region around the path taken by the ego-vehicle;
- Fig. 4: a flow diagram illustrating a method for generating ground truth data according to various embodiments; and
- Fig. 5: a computer system with a plurality of computer hardware components configured to carry out steps of a computer implemented method for generating ground truth data according to various embodiments.

### DETAILED DESCRIPTION

Employing machine learning methods, for example artificial neural networks, on low level radar data for object detection and environment classification may provide superior results compared to traditional methods working on conventionally filtered Radar detections, as shown by RaDOR.Net (in European patent application 20187674.5, which is incorporated herein in its entirety for all purposes). The low level radar data may for example include radar data arranged in a cube which may be sparse as all beamvectors below CFAR (constant false alarm rate) level may be suppressed, wherein missing antenna elements in the beamvector may be interpolated, and wherein calibration may be applied and the bin-values may be scaled according to the radar equation.

The superior results may be explained by the fact that the radar data contains plenty of information which is cut in conventional detection filtering and by the ability of the machine learning method to filter this large amount of data in a sophisticated way.

In addition to rich and genuine input sensor data, the preparation of ground truth (GT) data may be highly important. It should embody the desired output of the machine learning method while not forcing the machine learning method to create an output not actually represented by the input sensor data.

For example, creating the GT (manually or automatically) based on a stronger reference (e.g. Lidar) may yield a detailed and precise GT but may overstrain the machine learning method by requesting an output it cannot actually see from the input sensor position or due to the different kind of data acquisition of reference and input sensor (e.g., Lidar and Radar). This effect bears potential negative effect for the system output.

According to various embodiments, the GT data may be determined without using an additional reference sensor. Exemplary applications are determining of an Occupancy Grid (OCG) via a machine learning method or underdrivability classification using a machine learning method. The training pipeline may employ a traditional OCG method on conventionally filtered Radar detections to automatically create the GT for the network to train. The naive procedure of presenting the respective OCG frame output to the network at training would apparently limit the network to output OCG data resembling the quality of the utilized traditional OCG method.

Due to the conventional filtering, the traditional method may react only to "strong" signals and may thus delay the time until distant oncoming structures are identified. The machine learning method in contrast may have the capability to identify "weak" signals in the radar data (for example the low level radar data) to detect these structures earlier in case it was taught to using appropriate GT including these distant structures.

According to various embodiments, this appropriate GT may be created by feeding the traditional method additionally sensor data from "future timestamps", when creating the GT for a current timestamp. This results in a more complete ground truth data while being still based on data of the input sensor only, which incorporates distant and high structures as well, as they lead to "strong" signals in these additional future frames.

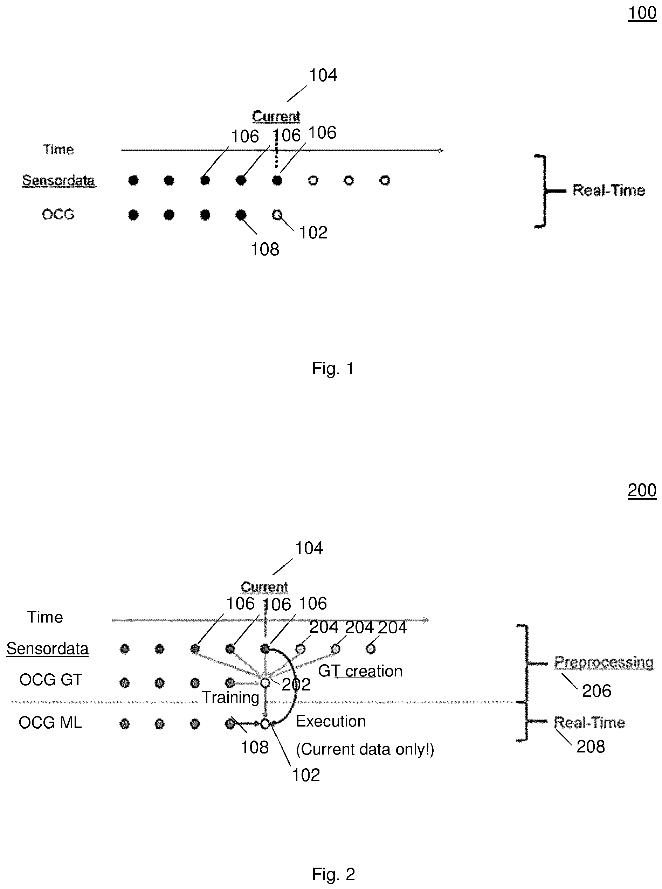

Fig. 1 shows an illustration 100 of a pipeline of traditional OCG creation. The OCG 102 created at the current time 104 is only based on sensor data 106 of (or up to) this point in time 104 and the OCG 108 of the previous point in time.

Fig. 2 shows an illustration 200 of a training pipeline according to various embodiments. A commonly used OCG method may be utilized to create GT data 102 for network training based on future input sensor data 204 in addition to the current and/or past input sensor data 106 in order to create a more complete output of the GT data 202 for the current time step 104. The machine learning method (for example network) may be trained on this enriched GT. On execution time, the machine learning method (for example network) may be fed by the current radar data 106 (for example low lever radar data) only. It will be understood that at execution time, the future sensor data 204 is of course not available; however, for training, a sequence of historic sensor data may be used, and this sequence includes future time steps (relative to the earlier time steps in relation to the future time steps). The network output 108 of the previous timestamp (or time step) may either be fed explicitly or stored within the network nodes (for example in a recurrent neural network).

According to various embodiments, lower level radar data may be used with traditional OCG method or traditional underdrivability classification for GT creation.

According to various embodiments, a combination with an additional sensor (e.g., Lidar) may be provided.

According to various embodiments, the methods as described herein may be used for alternative network output (e.g., multiclass SemSeg instead of OCG). SemSeg stands for semantic segmentation where each data point is assigned a higher level meaning like a sidewalk, or road. At the same time, OCG may show whether the particular data point represents an occupied regions or a free space, but in contrast to SemSeg no higher meaning.

According to various embodiments, the methods as described herein may be used for a radar-based automatic ground truth annotation system for underdrivability classification, for example for automatically generating ground truth data for the classification problem of under- and non-underdrivability with a radar sensor.

With the automatic ground truth generation as described herein, GT may be established with the used Radar itself, an offline system to generate GT data for an online system may be provided, no manual labeling may be needed, no additional sensor may be needed, no additional installing of sensor hardware may be required, no extrinsic calibration / temporal sync may be required for any additional sensors (while of course calibration and/or synchronization may still be described for the Radar itself), no additional software may be needed, and fast testing of new radars may be possible (for example the radar may just need to be installed and driving may start).

According to various embodiments, the limited elevation field of view (FoV) may be leveraged to label regions as under- or non-underdrivable.

Due to the limited elevation FoV, underdrivable objects may not be observable at close ranges in comparison to non-underdrivable objects which are also observed at lower ranges.

In order to be able to generate labels for high ranges as well, not only data from the past to the present may be used, but to data from the future path of the ego vehicle may be considered.

Furthermore, the information where the ego vehicle (equipped with the radar sensor) drives may be considered during the labeling process.

According to various embodiments, in order to automatically generate ground truth data, two different occupancy grid maps may be created:
- a full range omniscient map (FRom): A standard occupancy grid map may be created not only from the available information of past scans up to the present, but from all scans including future ones (and hence, the approach may be referred to as "omniscient").
- a limited range omniscient map (LRom): Like FRom, but only detections below a fixed range threshold may be considered during the mapping process to filter out underdrivable objects.

Labeling may be possible in regions which are considered by the mapping process.

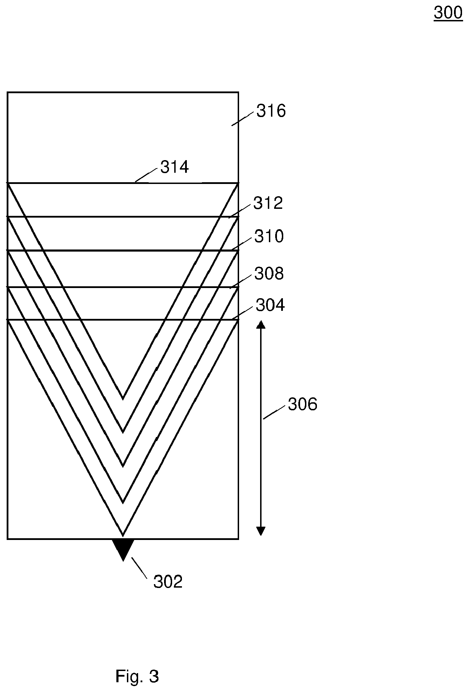

Fig. 3 shows an illustration 300 of a mask 316 which may be defined as a certain region around the path taken by the ego-vehicle 302. The size of that region may depend on the azimuth FoV of the radar sensor and the range threshold (e.g. 15m or 20m, like illustrated by arrow 306). The FoV for various exemplary positions along the path taken by the ego-vehicle 302 are illustrated by triangles 304, 308, 310, 314, and 314 in Fig. 3. Illustratively speaking, the mask 316 is the hull of all these triangles representing the FoV.

Only cells within the mask region 316 may be automatically labeled, and all remaining cells may be set as "unknown" and may be ignored during training of the machine learning model.

A label logic based on FRom, LRom and mask may be:
- A cell may be labelled as "non-underdrivable" if Probability(LRom) > 0.5 and mask == 1 (wherein mask==1 means that the cell is inside the mask region);
- A cell may be labelled as "underdrivable" if Probability(FRom) > 0.5 and probability(LRom) == 0.5 and mask == 1.

The default probability for the occupancy grid maps may be 0.5.

By the above logics, a cell which is occupied according to the limited range map is labelled as "non-underdrivable" (since objects which can be detected from a short distance usually are non-underdrivable). If an object is not present according to the limited range map, but is present according to the full range map, the cell may be labelled as "underdrivable" (since objects which can be detected from a large distance, but not from a shorter distance, usually are underdrivable).

The labeling approach according to various embodiments may allow to generate ground truth for cells in a world-centric grid related to the classification of under- or non-underdrivable. As for the grid maps, a world centric coordinate system and the detections from all scans may be used (and hence, the approach may be referred to as "omniscient"). The labels may then be also available for high ranges where the underdrivable objects are clearly observable within the FoV. This fact may allow machine learning methods to be trained that classify under- and non-underdrivable regions based on radar sensor information like elevation information or RCS (radar cross section) measurements for very high ranges.

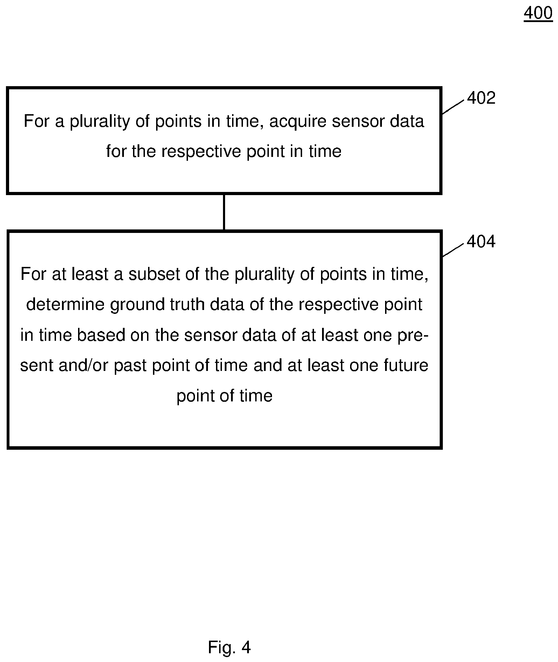

Fig. 4 shows a flow diagram 400 illustrating a method for generating ground truth data according to various embodiments. At 402, for a plurality of points in time, sensor data for the respective point in time may be acquired. At 404, for at least a subset of the plurality of points in time, ground truth data of the respective point in time may be determined based on the sensor data of at least one present and/ or past point of time and at least one future point of time.

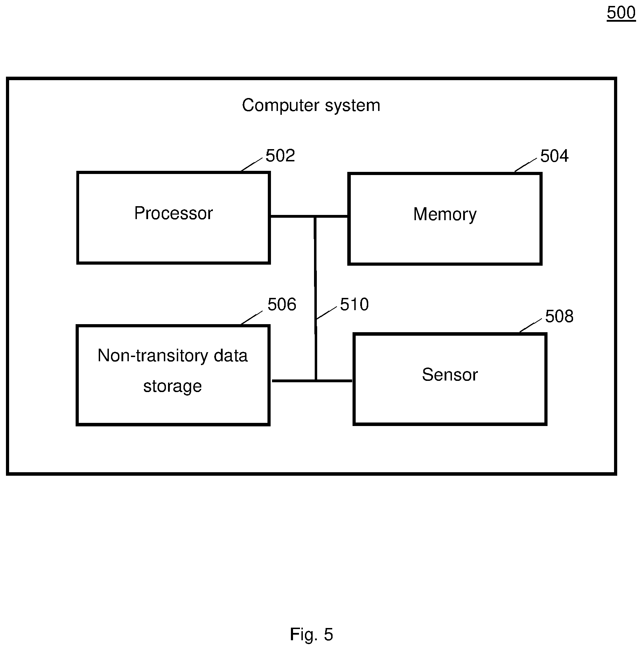

Fig. 5 shows a computer system 500 with a plurality of computer hardware components configured to carry out steps of a computer implemented method for generating ground truth data according to various embodiments. The computer system 500 may include a processor 502, a memory 504, and a non-transitory data storage 506. A sensor 508 may be provided as part of the computer system 500 (like illustrated in Fig. 5), or may be provided external to the computer system 500.

The processor 502 may carry out instructions provided in the memory 504. The non-transitory data storage 506 may store a computer program, including the instructions that may be transferred to the memory 504 and then executed by the processor 502. The sensor 508 may be used for determining the sensor data for the respective points in time.

The processor 502, the memory 504, and the non-transitory data storage 506 may be coupled with each other, e.g. via an electrical connection 510, such as e.g. a cable or a computer bus or via any other suitable electrical connection to exchange electrical signals. The sensor 508 may be coupled to the computer system 500, for example via an external interface, or may be provided as parts of the computer system (in other words: internal to the computer system, for example coupled via the electrical connection 510).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 500.

### Reference numeral list

- 100: illustration of a traditional pipeline of occupancy grid creation
- 102: occupancy grid
- 104: current time
- 106: sensor data of (or up to) the current time
- 108: occupancy grid of the previous point in time

- 200: occupancy grid creation in the training procedure according to various embodiments
- 202: ground truth data
- 204: future input sensor data
- 206: preprocessing
- 208: real-time

- 300: illustration of a mask which may be defined as a certain region around the path taken by the ego-vehicle
- 302: ego-vehicle
- 304: triangle
- 306: arrow illustrating range threshold
- 308: triangle
- 310: triangle
- 312: triangle
- 314: triangle
- 316: mask

- 400: flow diagram illustrating a method for generating ground truth data according to various embodiments
- 402: step of, for a plurality of points in time, acquiring sensor data for the respective point in time
- 404: step of, for at least a subset of the plurality of points in time, determining ground truth data of the respective point in time based on the sensor data of at least one present and/or past point of time and at least one future point of time

- 500: computer system according to various embodiments
- 502: processor
- 504: memory
- 506: non-transitory data storage
- 508: sensor
- 510: connection

## Claims

1. Computer implemented method for generating ground truth data ,
the method comprising the following steps carried out by computer hardware components:
- for a plurality of points in time, acquiring (402) sensor data for the respective point in time; and
- for at least a subset of the plurality of points in time, determining (404) ground truth data of the respective point in time based on the sensor data of at least one present and/or past point of time and at least one future point of time.

2. The computer implemented method of claim 1,
wherein the present point of time, past point of time and/or future point of time are relative to the respective point in time.

3. The computer implemented method of at least one of claims 1 or 2,
wherein the sensor data comprises at least one of radar data or lidar data.

4. The computer implemented method of at least one of claims 1 to 3, further comprising:
training a machine learning model based on the ground truth data.

5. The computer implemented method of claim 4,
wherein the machine learning model comprises a step for determining an occupancy grid; and/ or
wherein the machine learning model comprises a step for underdrivability classification.

6. The computer implemented method of claim 5,
wherein the ground truth data is determined based on at least two maps.

7. The computer implemented method of claim 6,
wherein the at least two maps comprise a full range map based on scans irrespective of a range of the scans.

8. The computer implemented method of at least one of claims 6 to 7,
wherein the at least two maps comprise a limited range map based on scans below a pre-determined range threshold.

9. The computer implemented method of claims 7 and 8,
wherein a cell is labelled as non-underdrivable or underdrivable based on a probability of the cell of the full range map and a probability of the corresponding cell of the limited range map.

10. The computer implemented method of claims 7 and 8 or claim 9,
wherein the cell is labelled as non-underdrivable if the probability of the cell in the limited range map is above a first pre-determined threshold.

11. The computer implemented method of claims 7 and 8 or at least one of claims 9 to 10,
wherein the cell is labelled as underdrivable if the probability of the cell in the full range map is above a second pre-determined threshold and the probability of the cell in the limited range map is equal to a value representing no occupation in the cell.

12. The computer implemented method of at least one of claims 4 to 11,
wherein the machine learning model comprises an artificial neural network.

13. Computer system (500), the computer system (500) comprising a plurality of computer hardware components configured to carry out steps of the computer implemented method of at least one of claims 1 to 12, wherein the computer system (500) preferably further comprises a sensor (508) configured to acquire the sensor data.

14. Computer system (500), the computer system (500) comprising a plurality of computer hardware components configured to use the machine learning model trained according to the computer implemented method of at least one of claims 4 to 12, wherein preferably the computer system (500) is comprised in an advanced driver-assistance system.

15. Non-transitory computer readable medium comprising instructions for carrying out the computer implemented method of at least one of claims 1 to 12.
